# EUROPEAN PATENT APPLICATION

(11) **EP 1 128 680 A1**
(43) Date of publication of application: **29.08.2001**
(21) Application number: 00103421.4
(22) Date of filing: 25.02.2000
(51) Int. Cl.: H04Q 3/00

(54) **Method for changing Centrex services**

(71) Applicant: Telefonaktiebolaget L M Ericsson (Publ), 126 25 Stockholm (SE)
(72) Inventor: Toth, Zoltan Peter, 1037 Budapest (HU)
(74) Representative: HOFFMANN - EITLE

(57) **Abstract**

The invention refers to a telecommunication network (1), comprising a plurality of switching units (2,3,4), a plurality of customer premises equipments (7,8,9,10) connected to said switching units, and a plurality of links for interconnection of the plurality of switching units, wherein within the network at least one Centrex means (5,6) for offering Centrex services is provided. In order to provide a telecommunication network whose subscribers are not necessarily bound to a Centrex service once established for a company, it is suggested to introduce a changing means for changing the membership of a respective customer premises equipment in accordance with predefined signals transmitted between said customer premises equipment and said Centrex means.

## Description

The invention refers to a telecommunication network, comprising: a plurality of switching units, a plurality of customer premises equipments connected to said switching units, a plurality of links for interconnection of the plurality of switching units, wherein within the network at least one Centrex means for offering Centrex services is provided, such that the Centrex means is capable establishing, maintaining and cancelling memberships of Centrex groups among a number of said customer premises equipments.

In the sense of the present invention a customer premises equipment (CPE) covers a broad definition, i.e. anything connected to telephone company facilities (which might be wire, fibre or radio link) by any means (which could include direct electrical connection or inductive coupling). Hence, CPE includes any device that enables the customer to obtain a useful service from telephone network.

Furthermore, in the sense of the present invention Centrex is a service provided by a local exchange carrier that mimics the functionality of a private branch exchange (PBX) with station lines provisioned from the central office switch of the telephone company. Hence, before explaining the services of Centrex a short overview over the features of a common private branch is given.

A PBX is located on the premises of the customer and serves about 50 to 1000 of lines. It is similar to the functionality of the central office switch in that it provides dial tone to users, and connects calls to other users located on the customers premises or to the public-switched telephone network. Calls being placed to subscribers outside the PBX must be preceeded by a special access code, traditionally 9, for a nontall outside line. PBX has its own numbering plan, normally with 3 to 5 digital station numbers. Each telephone served by the PBX has an individual extension number, and can be directly dialled from any other phone served by the PBX. Outside calls coming into the PBX from the local exchange are answered by a PBX operator and transferred (extended) to the desired station (extension). Furthermore, direct inward dialling (DID) allows calls coming in from the local exchange over special DID trunks to be connected directly to an extension without intervention by an operator or auto-attendant. In this phase a caller dials a standard phone number corresponding to the particular PBX and extension number. DID thus requires a signalling arrangement between the central office and the PBX for transferring the inbound number and it also requires that all of the numbers switchable by DID are unique in the exchange numbering scheme.

A modern PBX is in a way similar to a switching unit at a central office in that it is a digital switched complete with central control, program and call store, line and trunk interfaces, and many of the same features. Various options such as dual-central control, back up power and custom calling features are available. Diagnostic software continuously monitors the PBX and reports problems to the attendant or service personal. However, the PBX mainly differs from a switching unit in a central office in its capacity to serve lines and process calls. A PBX typically serves fewer than a 1000 stations and can process between 50.000 and 100.000 busy hour call attempts, whereas a modern digital central office switch will serve between 20.000 and 80.000 lines with over a 1.000.000 busy hour call attempts. On the other hand it can be noted that very large PBX installations that serve tens of thousands of stations are actually switching units used usually in central offices.

Centrex is a service which offers a company the same feature as a PBX but is normally situated in the central office switch of the company. This is done by software which partitions the switching unit in the central office in order to give each Centrex customer its own virtual PBX system. With a Centrex arrangement each customer premises equipment is connected directly to a switching unit. The Centrex customer has a numbering plan similar to that of a PBX, and places calls to other extensions within the Centrex group exactly as a PBX user would. As a result, the Centrex user sees a system that provides services which are indistinguishable from that provided by PBX.

Advantages of Centrex include the flexibility for a company. It is not necessary to invest in a complete PBX station but all extensions can be allocated dynamically to the company. A company can even announce that a limited number of extensions, e.g. 10 lines, are just needed for one week. This can also be done by a Centrex service without any hardware work to be done. Another advantage is that all networking services can be offered which are covered by the networking features of the switching unit of the central office. Centrex services can even be arranged for offices located in different towns and thus connected to different switching units which is very difficult to be realised with a PBX solution.

From US 5 673 310 a common Centrex system is known wherein different groups, such as independent business users, can be served by the same Centrex equipment. A switch, located at a higher hierarchical level relative to the switch which supplies Centrex services, can serve the different groups and provide enhanced services when users of the same business group not served by the same Centrex switch are called. In detail, a telecommunication network serves first subscribers by a first telephone exchange (CTX) via a first telecommunication switch. A first signal is received at a first switch from the first CTX which indicates that call origination services are to be provided directed by a second pubic network switch for first subscriber. A second signal is received at a second switch from the first CTX indicative of the identity of the first subscriber. A record located in a database coupled to the second switch is retrieved based on the identification of the first subscriber. A group affiliation parameter stored in that record is identified based on the identity of the first subscriber. A group affiliation parameter defines one organisation of which the first subscriber is a number. Third signals are received at the second switch generated by the one first subscriber. The third signals comprise a call destination number of a second subscriber not served by the first CTX. The second switch transmits a call set-up message to a third switch associated with the second subscriber. The call set-up message includes the group affiliation parameter so that the first subscribers membership in the one organisation can be used in further call processing.

From WO 93/17515 a Centrex service is known whose architecture is adapted to an advanced intelligent network. In a network of this kind, a subscriber is connected to one or more corresponding exchanges by trunk lines, and each exchange provides a data link using common channel signalling to a signalling transfer point STP, which in turn is connected to an integrated service control point ISCP. Thereby area wide Centrex extends a number of service features to the business group over a broad area through multiple central offices by taking the programming intelligence capacity out of the central offices and moving it to the integrated service control point ISCP. Service features such as call routing are controlled by data stored in said ISCP. Establishing or changing services for one or all of a particular customers line can be done in the central database within the ISCP. Centrex services such as a extension number type intercom dialling and call transfer can be also extended across the exchange via the central database within the ISCP.

From WO 96/11544 a regional telephone network system offering Centrex services is known. A certain number of subscriber connections of an exchange is distributed as a Centrex group to several different telephone exchanges. A table-type subscriber database is stored in each exchange with subscribers of at least one Centrex group. The database is associated with this at least one Centrex group and contains all information necessary for implementing Centrex services, wherein the subscriber database is made available to the network during call control. This can be achieved because all necessary number conversions relating to a Centrex group and verifications as to whether the calling subscriber belongs to the Centrex group can be performed by means of the same table. A subscriber can thus be identified as soon as the directory number of the calling subscriber is signalled to the exchange of the called subscriber. Each Centrex group is addressed by the operators of the exchange merely by the name of the respective Centrex group. One Centrex group has the same name in all exchanges. The data of this Centrex group can thus be updated without referring to the actual location of the table in the exchange.

From the description of the prior it becomes clear that in the past effort was spent on the improvement of regional distribution of Centrex services in order to increase the flexibility of Centrex. However, there is still a demand for increasing the flexibility of Centrex services especially with regard to other aspects. It is to be noted, e.g. that by permanently connecting a subscriber by a Centrex line the private calls are permanently charged to the respective company. However, permanent Centrex membership is not always required. A home working subscriber, e.g., who works for more than one company at a time still wants to make private calls with the same subscriber line. In this case it needs much administration to decide which Centrex customer should take the costs because the subscriber can access only one numbering plan. To handle this situation the Centrex customer has to maintain a big amount of call logging information and has to decide for each outgoing call if it was a business or a private call in order to charge it to the correct account. This puts a load on the billing system and causes extra administration. An introduction of additional Centrex groups does not provide access to the private numbering plan with cheaper charging nor to the Centrex services and features. Rather, this still requires extra processing of billing information.

Therefore, it is an object of the invention to provide a telecommunication network whose subscribers are not necessarily bound to a Centrex service once it is established for a company.

This object is solved by a telecommunication network according to claim 1 and a corresponding method according to claim 13. The inventive solution is achieved by a changing means for changing the membership of a respective customer premises equipment in accordance with predefined signals transmitted between said customer premises equipment and said Centrex means.

The solution according to the invention can be used in Centrex based private networks to support dynamic behaviour of Centrex extension lines, especially in conjunction with teleworking. According to the invention it is possible to change the Centrex membership for specific subscriber lines. When a line is considered as a Centrex line belonging to a certain Centrex group, the subscriber can use the numbering plan, access rights, charging schemes and features of that Centrex group. When the line is considered as a public line, the subscriber can use the line as a public one.

The interpretation of the term "changing" will generally depend on the person of the company who has got access to the changing means. If there is a user of an already existing Centrex line, the changing means will normally enable the changing between a public service and the Centrex service and/or changing between different Centrex services. Hence, the following cases have to be distinguished:
- If the subscriber changes the line from public to Centrex line, he will access the Centrex services and a numbering plan.
- If the subscriber changes the line from Centrex to public line, he will access the public services and a numbering plan.
- If the subscriber changes the line from Centrex to Centrex line between different Centrex groups, he will access the Centrex services and numbering plan of the Centrex network he has switched to. In this case the new Centrex group must be identified as part of the control procedure.

However, according to one aspect of the present invention, the changing means could also be accessed by an operator of a corresponding company. In this case the changing means could enable the establishing, maintaining and cancelling of membership of at least one Centrex service. Thus, it is possible that a company already using Centrex services performs the establishing, maintaining and cancelling of memberships of certain subscriber lines on its own and is therefore not bound to a complicated request procedure in order to request such actions by the central office which operates the corresponding switching unit. The case that a new Centrex service is established is in particular possible, if the corresponding company has got enough spare capacity to assign a new public line to the service which has to be established. The central office then can provide the respective company with appropriate keywords which indicate during signalling that the person who communicates with the changing means is entitled for the establishing and cancelling of memberships.

In accordance with another aspect of the present invention a saving means is provided for saving options and services of a respective customer premises equipment for each membership. Hence, it is of course possible that the same services can be used again after restoring a membership.

In accordance with another aspect of the present invention a Centrex service comprises the features of direct dialling inside and outside a Centrex group, station-to-station calling within a Centrex-group, grouping multiple sites with transparent numbering plans and centralized message desk. For station-to-station calling extension numbers can be used, e.g. as opposed to full, seven-digit public numbers. Multiple sites with transparent numbering plans and features can be supported with regional Centrex by multiple switching units using common channel signalling (CCS). A centralized attendant/message desk with call origination information for informed processing of forwarded calls can be provided. Additionally, common voice user features such as forwarding, transfer, call waiting, pick-up, and three-way calling can be provided for the Centrex service.

In accordance with a further aspect of the present invention the predefined signals comprise a dialled procedure code which is interpreted in the Centrex means. There are so-called category markings on the subscriber lines so that certain category markings are assigned and stored in the switching unit of the central office. When a respective subscriber dials a number or subscriber procedure it can be checked whether this line is authorised for this service or not.

Preferably, after the interpretation of the procedure code a keyword for validation has to be entered additionally, which is checked together with the identity of the customer premises equipment. In particular, a keyword is suitable for extending the rights with regard to the changes to be undertaken. Thereby it is possible to provide a normal Centrex user with some limited rights to change the Centrex membership from Centrex to other services and vice versa. Additionally, authorised persons as an operator of the respective company using Centrex can be supplied with keywords in order to be authorised to establish and cancel Centrex memberships of the company. Thus, once a company has got the access to a Centrex service, the company no longer depends on the maintenance support of the central office but can maintain its Centrex group on its own. This is valid under the provision that the company has got enough spare capacity to assign new Centrex group memberships to a public line. Otherwise, there might be at least a delay when publishing a new Centrex membership because the corresponding public line has first to be connected by the central office.

In order to offer sophisticated changing facilities by the changing means a menu can be offered for interactive controlling of the desired change of membership after the interpretation of the procedure code by the checking means.

The communication between the customer premises equipment and the corresponding switching unit in the central office can be carried out by different ways. Preferably, the communication from a switching unit to a respective customer premises equipment is carried out via voice prompt or tones. Furthermore, a communication from a respective customer premises equipment to a corresponding switching unit is carried out via dual-tone multi frequency (DTMF) dialling and/or DSS1 messages and/or SS7 messages. The current set of international protocol call standards for common channel access signalling is known as the digital subscriber signalling system No.1 (DSS1). The current set of international protocol standards for common channel network signalling is known as the signalling system No.7 (SS7).

In accordance with a further aspect of the present invention a Centrex means comprises a database associated with the switching unit of the respective customer premises equipment. However, it is also possible that databases for the Centrex means are provided at higher levels of the network such as a higher node or a top level node. Depending on the installed level of the database regional aspects of the Centrex service can be covered, however, it has to be noted that due to more effort for signalling a performance in view of the readiness of the Centrex service might be decreased.

In accordance with a further aspect of the present invention the customer premises equipment comprises a telephone set and/or various equipment suited for transmission of data.

In accordance with a further aspect of the present invention the subscriber enters a prompt after dialling his procedure code saying or displaying "please dial the number of the Centrex-group where you want to belong now". As an answer to this prompt he can press a number via DTMF. If a terminal is capable of sending and receiving DSS1 messages it is very convenient to exchange messages with the switching unit of the central office via a terminal (e.g. ISDN terminals).

The invention will now be described by way of several embodiments with reference to the accompanying drawings in which
- Fig. 1: shows a first embodiment according to the invention with a common configuration of Centrex services together with a linking database at higher level,
- Fig. 2: shows a second embodiment according to the invention with configuration of Centrex services in an intelligent network,
- Fig. 3: shows a third embodiment according to the invention with a configuration of Centrex services in a decentralised manner,
- Fig. 4: shows a signalling protocol of a service invocation for analogue lines,
- Fig. 5: shows a signalling protocol of a service interrogation for analogue lines,
- Fig. 6: shows a signalling protocol of a service invocation for ISDN lines with en-block sending,
- Fig. 7: shows a signalling protocol of service interrogation for ISDN lines with en-block sending,
- Fig. 8: shows a signalling protocol of service invocation for analogue lines with overlap sending and
- Fig. 9: shows a signalling protocol of service interrogation for analogue lines with overlap sending.

In the following the invention is described with regard to three cases of Centrex organisation, that is a classical approach with Centrex services associated to each switching unit together with an optional database for interconnection, a centralised approach with a centralised Centrex service for all switching units and a regional approach with Centrex data bases belonging only to certain switching units.

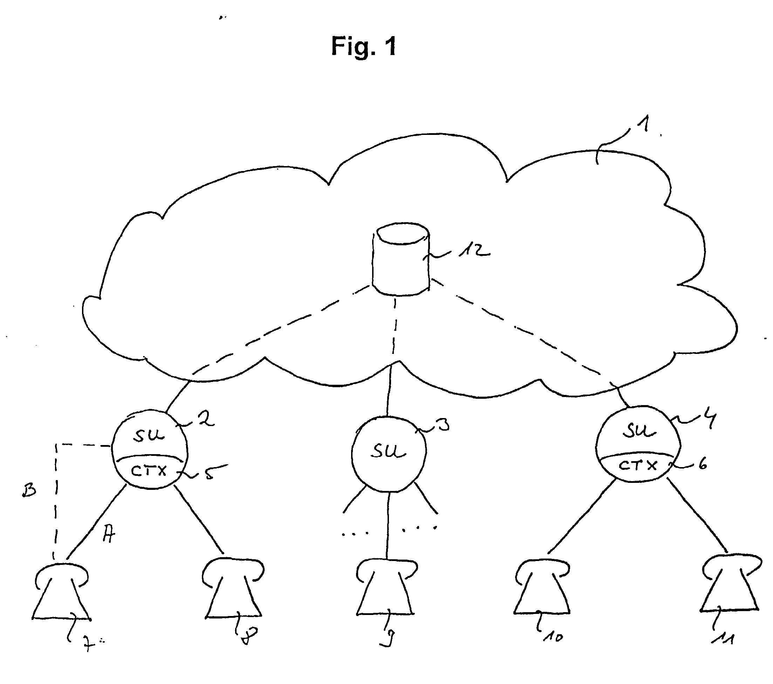

Fig. 1 shows a first embodiment according to the invention with a common configuration of Centrex services together with a linking database on a high level. Fig. 1 shows a telecommunication network with a plurality of switching units 2, 3, 4 and a plurality of customer premises equipments (CPE) 7 to 8. The CPE might typically consist of a telephone set. However, it will be understood that CPE may consist of various equipments suited for transmission of data as well as voice communication. The CPE 9 is supported by a conventional switching unit 3. Normally, the switching unit 3 will be a central office switch so that the subscriber associated with the CPE 9 may be a residential telephone user or a general member of the public served by a telephone. However, it will be understood that the switching unit 3 may comprise also a private branch exchange (PBX) which supports a plurality of CPE equipment directly coupled to the PBX. Additionally, a central office switch may be connected with the PBX via trunk lines.

Another class of subscribers, e.g. business users associated with CPE 7, 8, 10 and 11, are supported by Centrex service facilities 5, 6 associated with the switching units 2 and 4. These subscribers typically represent groups of business customers or other groups which desire common calling features among related members which are supported by Centrex services. Intercommunication of all switching units is enabled via the network 1. For example inter-exchange carrier can be provided to provide long distance services. A central database 12 within the network 1 stores a plurality of records corresponding to subscribers served by the plurality of switching units 2, 3 and 4. The database 12 may be connected to high level switches wherein these switches have the capability of servicing incoming call requests like a local central office switch. Thereby groups of subscribers, such as geographically separated groups of employees of the same corporation 7, 8 and 10, 11, which are served by different Centrex facilities 5 and 6 can be treated as a common business group for purposes of communication services, and can be provided access to the same dialling plan, features, and services.

In the following different scenarios will be described for establishing, maintaining and cancelling memberships of Centrex groups among a number of said customer premises equipments. Firstly, the case is considered that CPE 7 is not part of any Centrex service equipment. In order to register CPE 7 as a member of the Centrex service equipment 5 a conventional way was that the operator of the central office of the switching unit 2 registered the CPE 7 on the request of the company in the Centrex service equipment 5. According to the invention, however, it is also possible that the operator of the business user associated with CPE 7 registers the CPE 7 as a Centrex member within the switching unit 2. This is done by dialling a special procedure code assigned to the business user whereupon the operator is prompt to enter a keyword for validation. This keyword enables the operator to request all the required membership changes and in particular the establishing and cancelling of memberships so that the keyword has the same relevance as a signature of a representative of the respective company.

The establishing of a new Centrex membership is immediately possible, if the company has got enough spare capacity of public lines connected to the corresponding central office. In the case, if a new line first has to be connected between the company and the central office, the establishing of a new line might also be possible by using the changing means according to the invention. However, in a first step a new line has to be assigned by the central office and therefore a delay might occur until the requested new Centrex membership is actually established.

After the operator has requested the membership for CPE 7 with the Centrex service 5, the connection represented by the procedure via the procedure code can be disconnected. As a result, CPE7 will be connected as indicated by line A with the Centrex service 5.

Next, the case is considered for changing memberships of the CPE 7 with regard to the Centrex service equipment 5. There might be the demand that the subscriber (who is at home, e.g. doing teleworking) wants to change from a Centrex service to a public service. He dials then a procedure code which is interpreted in the switching unit 2 of the central office. The communication is done via standard DSS1 message (digital subscriber signalling system No. 1) or via DTMF. The procedure code is associated with the subscriber line of the CPE 7 so that no additional keyword is necessary. However, an additional keyword can still be provided, in order to prevent anybody else from executing a membership change procedure when the owner of the CPE 7 is absent. If there is only one Centrex service and one public service no further input is necessary for the switching unit but the CPE 7 will immediately change its membership to public service which will be acknowledged by the switching unit 2 of the Centrex office and lastly the connection will be interrupted. As a result, the CPE 7 is not registered anymore to the Centrex service 5 which is indicated by the line B. In case more than one Centrex service is provided preferably a menu will be entered so that the subscriber is prompted for dialling the number of the Centrex group or the public group where he wants to belong now. Alternatively, a procedure code can be used to determine the target Centrex group. When a respective subscriber dials a number or subscriber procedure, it can be checked whether this line is authorized for this service or not. After dialling the valid number the membership is changed and after acknowledgement the connection is disconnected.

It has to be noted that although a membership is changed all options of the membership are saved and thus are still available within the switching unit 2 or the respective changing means. Thereby the same service can be used again after restoring the membership, wherein this applies to both two public and Centrex services.

Hence, the procedure to restore a Centrex membership is the same as changing the membership to a public service because within the switching unit 2 already all necessary data are stored. Therefore the subscriber is already entitled to use the respective Centrex services. Accordingly, the same procedure code is dialled by the subscriber which is interpreted in the switching unit in connection with the dialling line of CPE 7. In case there is only a public service and a Centrex service changing of the membership immediately takes place to the Centrex service wherein in the case of several Centrex services a menu for changing the membership is entered.

A changing means according to the invention is preferably provided for a switching unit which comprises Centrex services. With regard to Fig. 1 a changing means therefore should be provided within the Centrex service partitions 5 and 6.Furthermore, if intercommunication between different switching units using a Centrex service is required, it is possible to provide further parts of changing means within the linking data base 12 of the network 1.

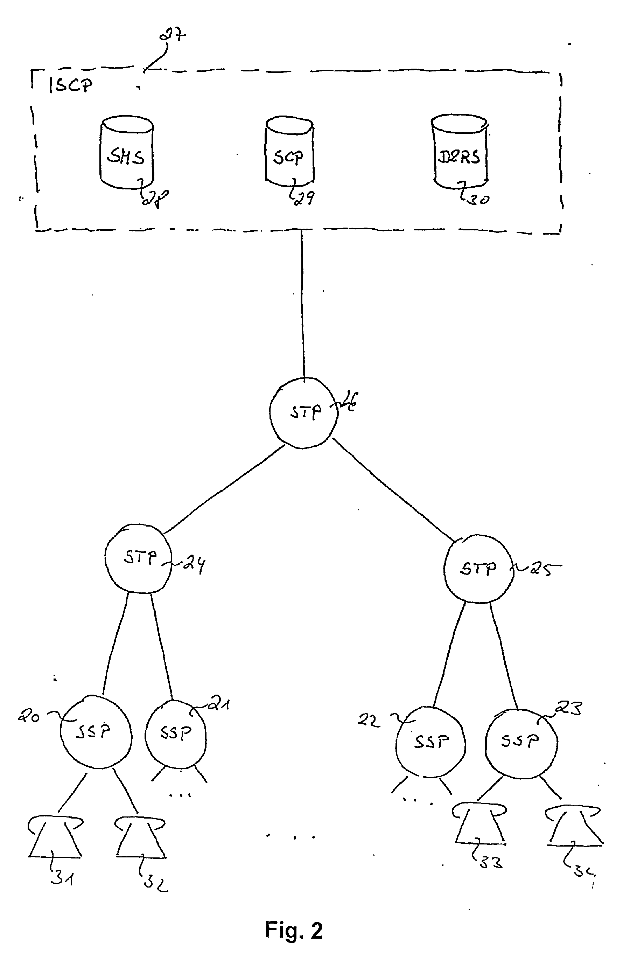

Fig. 2 shows a second embodiment according to the invention with a configuration of Centrex services in an intelligent network. Switching units 20, 21, 22 and 23, which are indicated by SSP (service switching point) are programmable switching units. They identify the call of an advanced intelligent network (AEN), sent interrogations to the integrated service control point 27 (ISCP) and receive instructions and data there from for call processing. Switching units 20 and 21 are connected via data links to a regional signalling transfer point 24 (STP) and switching units 22 and 23 are connected to another regional signalling transfer point 25 (STP). The regional STP nodes 24 and 25 are further connected to a regional STP node 26, which in turn is connected to the integrated service control point 27 (ISCP). The connections from the switching units to the nodes 24 and 25 are data links, e.g. common channel signalling links according to No.7, whereas the connections from the STP nodes 24, 25 to the STP node 26 and from there to the service point 27 are packet network lines. The STP 27 comprises a service management system 28, a data and reporting system 30 and a service control point 29.

In order to realise the regional distribution of a subject service a centralised database offering the Centrex surface is provided in a service point ISCP 27. This database contains all data relevant to the Centrex service. The regional switching units SSP 20 to 23 are programmed to identify as regional Centrex calls the calls and service requests from certain subscriber lines coupled to said service and connected to the switching unit. A plurality of customer premises equipments 31 to 34 are connected to the switching units 20 to 23. Again, a CPE may consist of a telephone set or of various equipment suited for the transmission of data as well as voice communications. When a switching unit, e.g. switching unit 20, receives a service request from a subscriber line, e.g. CPE 31, the switching unit at first detects that the line is a Centrex line. After this, the switching unit 20 sends a request on the signalling channel No.7 through signalling transfer points 24 and 26 to the service control point ISCP 27 for all information necessary for processing the call. The request contains both the subnumber (extension number within the Centrex group) of the calling subscriber and the digits dialled by the subscriber. The control point 27 fetches the data of the calling subscriber from the database, and on the basis of this data and said digit, it gives the switching unit 24 instructions for routing the call. This task may be, for example, a call or a call transfer to a subscriber 34 belonging to the same Centrex group and connected to a switching unit 23 which is geographically remotely situated.

According to Fig. 2, Centrex services are provided and changed in a centralised manner. Hence, the advantage is that the centralisation does not entail programming changes in exchanges controlled by it. Therefore, a changing means in accordance with the invention can be easily implemented as well in a centralised manner in the service control point 29. Again, changing of the membership of the respective customer premises equipment is done in accordance with a predefined procedure code which is defined globally for the corresponding exchange. Additionally, an operator of the company demanding the Centrex surface can be provided with a keyword in order to have also certain rights for the administration of the membership of certain CPE within the company. Especially, the operator of the company can be provided with rights to establish and to cancel the membership to Centrex services of a certain CPE. This is valid under the provision that the company has got enough spare capacity to assign new Centrex group memberships to a public line. Otherwise, there might be at least a delay when publishing a new Centrex membership because the corresponding public line has first to be connected by the central office.

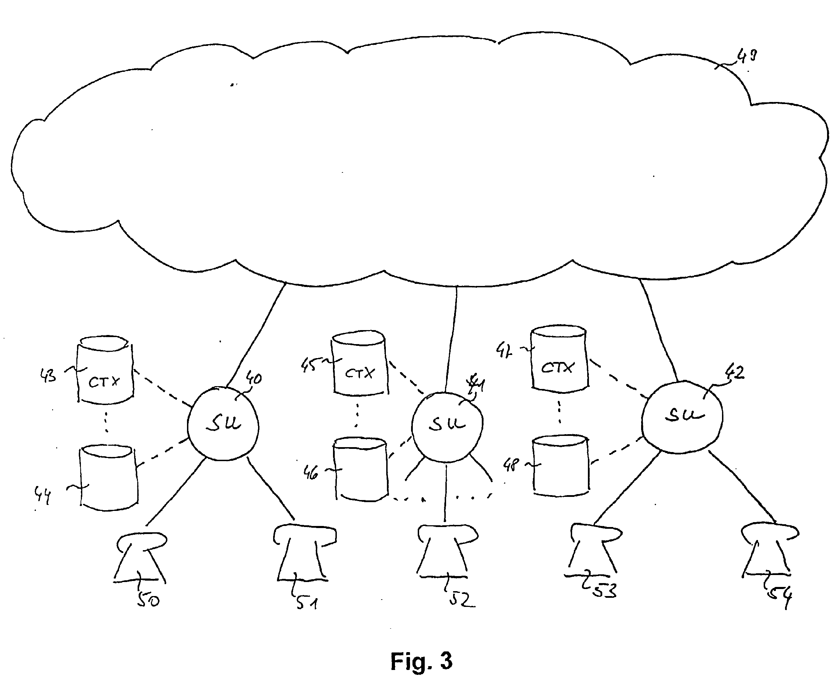

Fig. 3 shows a third embodiment according to the invention with a configuration of Centrex services in a decentralized manner. Switching units 40, 41 and 42 of local offices are provided for connecting customer premises equipments (CPE) 50, 51, 52, 53 and 54. As already mentioned above, the CPE may typically consist of a telephone set or various equipment suited for transmission of data as well as for communications. Subscriber data bases 43, 44, 45, 46, 47 are 48 are connected to the corresponding switching units 40, 41 and 42. Specific table-type Centrex files 43, 45 and 47 are provided for each switching unit 40, 41 and 42. The switching units 40, 41 and 42 are connected via a network 49, wherein the Centrex data bases 43, 45 and 47 are utilised by the network 49 or the switching units 40, 41 and 42 when establishing a call.

In the following the procedure for establishing a call e.g. by CPE 50 connected to the switching unit 40 will be described. When the call control of the switching unit 40 detects on the basis of the subscriber data of the CPE 50 that the subscriber belongs to a Centrex group, i.e. to a Centrex user group, it uses data extracted from the database 43 in order to find out whether the subscriber is establishing the call using subnumbers of the user group or public directory numbers. For this, the call control performs the necessary subnumber-to-directory number conversion, obtains the charging data needed for internal calls of the user group, and then routes the call in accordance with the normal route selection analysis common to all calls. The number to be analysed is thus the directory number corresponding to the subnumber of the user group. Alternatively, the call control routes an external call in accordance with the route selection analysis common to all calls. A number to be analysed has when the directory number is dialled by the subscriber without the public network access code used for the identification of external calls. From the switching unit 40 of the CPE 50 the directory number of the calling subscriber is transferred by the use of normal signalling to the switching unit 42 of the called subscriber, e.g. CPE 54. If the call control in the switching unit 42 of the called subscriber 54 detects that the subscriber belongs to a Centrex group, it verifies whether the directory number of the calling subscriber 50 can be found in the sub-member/directory number table of the called subscriber 54.

If the subscriber data of the subscriber 50 indicates that subscriber 50 belongs to a Centrex group, a call control unit within the switching unit 40 requests to fetch the corresponding subscriber data from the Centrex subscriber database 43. As a response to the request, the call control unit receives e.g., the following information: Centrex group identifier, length of subnumbers used in the group, public network access code and operator number the first number after which the abbreviated numbers are common to the group, and the length of the abbreviated numbers common to the Centrex group. On the basis of these data, the call control finds out whether the call is from the operator or from a group member, and whether the called subscriber is a number of the same Centrex group or not (the subscriber dials the public network access code). In the case of an external call, the call establishment proceeds in a manner known to one skilled in the art. In case of an internal call of the Centrex group, the subnumber table of the Centrex group in the subscriber database 43 is searched for the subnumber dialled by the subscriber, where after the subnumber is converted to the corresponding directory number of the telephone network. Other necessary data, such as charging subgroup data and tariff data for internal calls, are also obtained from the database. Thereafter, the call establishment proceeds in the normal manner.

The subscriber 54 of a Centrex group receives calls either with a direct number through the Centrex operator or, in a Centrex group with no operator, on the basis of Centrex switching. In the case of an incoming call to the subscriber 54 and in case the CPE 54 is an analogue device, the subscriber is informed by means of various ringing tones of whether the call is from within or outside the Centrex group. For this purpose, the call control must find out whether the calling subscriber 50 belongs to the same group as the called subscriber 54. The comparison is made by means of the directory number of the calling subscriber 50, since the subscribers 50 and 54 are connected to different switching units 40 and 42. If the directory number of the calling subscriber is not obtained, the call is interpreted as coming from outside a Centrex group. When the call arrives at the switching unit 42, the call control requests the data of the called subscriber 54 from the Centrex database 47. If the called subscriber 54 is found to be a member of the Centrex group, it is verified at this stage at the latest whether the calling subscriber is also a member of the same Centrex group.

The network of the third embodiment according to Fig. 3 has a complete decentralised structure of Centrex services. Therefore, the changing means according to the invention can be provided in each local Centrex database associated with the corresponding switching unit. Hence, in contrast to the embodiment according to Figs. 1 and 2 changing of the membership of a respective CPE can be concentrated on the Centrex databases associated with the corresponding switching unit. Therefore, a simple signalling between the Centrex databases and the corresponding subscriber is possible. Since the Centrex databases are not centralised in any way, rather sophisticated communication between a different Centrex databases is necessary in order to update all the Centrex databases of the other switching units.

All the scenarios described above are intended merely to illustrate the invention. Although not mentioned, the following cases are also possible with Centrex calls: a call to the central number of the Centrex group, a call to the personal number of the operator, re-dialling, the use of abbreviated numbers, the use of ISDN, etc.

In the following, several signalling protocols are described for a service invocation and a service interrogation of a Centrex membership. During a service invocation the subscriber is able to change the membership marking of the subscriber line in the network database. Furthermore, during a service interrogation the subscriber is able to read the membership marking of a subscriber line from the network database. The communication between the subscriber and the network database can be led through a transit node and a service node. However, the existence of the transit node is optional, and may be located in the access network or the transit network, depending on network configuration. The service node may be collocated with the network database, depending on network configuration. The subscriber entity means the subscriber's signalling equipment, e.g. a DTMF phone or a ISDN terminal.

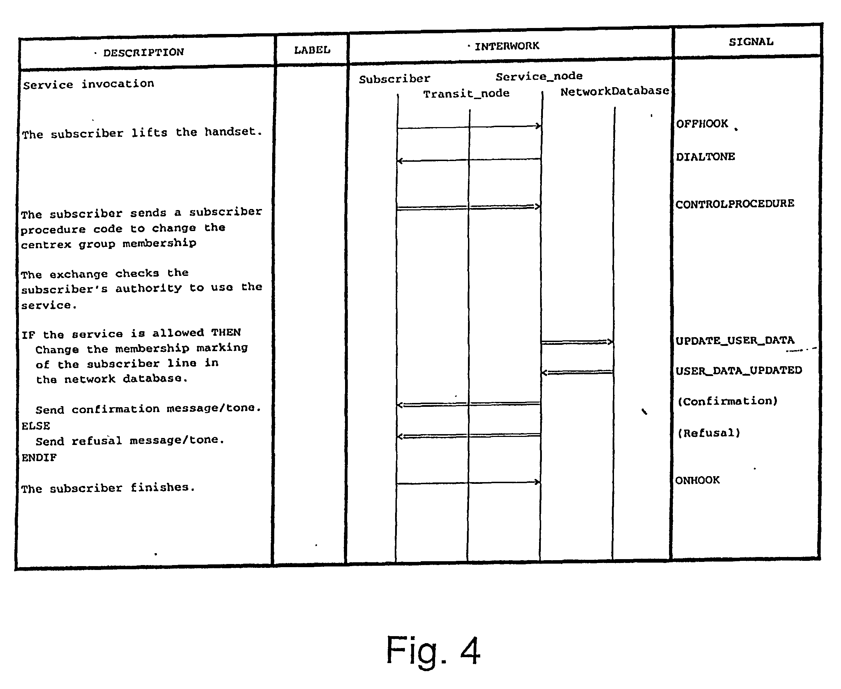

Fig. 4 shows the signalling protocol of service invocation for analogue lines. After lifting the handset, the subscriber sends a subscriber procedure code to change the Centrex group membership. The exchange checks the subscriber's authority to use the service. If the service is allowed, the membership marking of the subscriber line in the network database is changed. As a confirmation a message and/or a tone is sent to the subscriber. However, if the subscriber is not authorized to use the service, a refuse message and/or tone is sent.

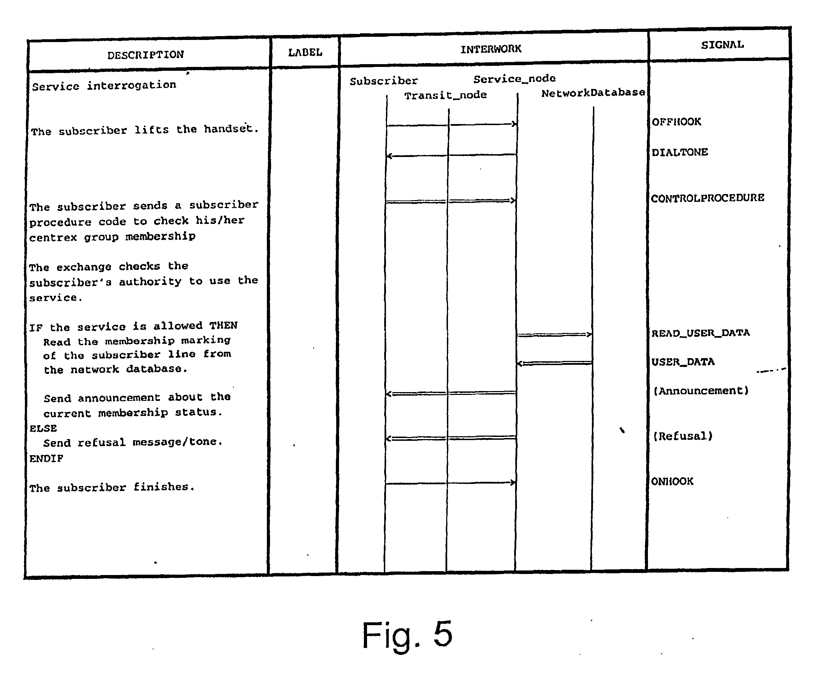

Fig. 5 shows a signalling protocol of a service interrogation for analogue lines. The difference with regard to Fig. 4 consists in the fact that the membership marking is not changed, but only read from the network database, wherein an announcement is sent to the current membership status.

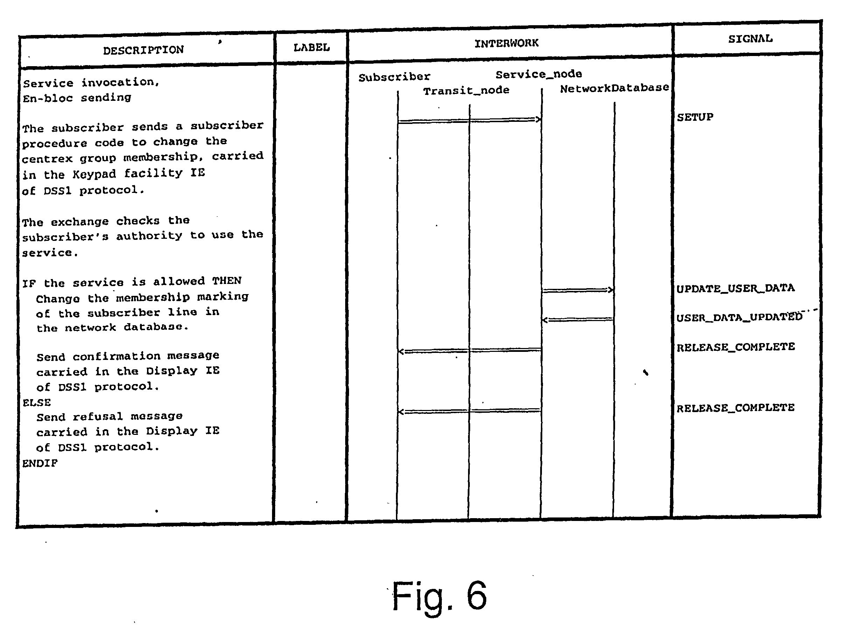

Fig. 6 shows a signalling protocol of a service invocation for ISDN lines with en-block sending. As a protocol for common channel access signalling the digital subscriber signalling system No. 1 can be used. Hence, to change the Centrex group membership the keypad facility IE of the DSS1 protocol can be used. Furthermore, as a confirmation message or a refusal message the display IE of the DSS1 protocol can be used. If the service is allowed, then the membership marking is changed of the subscriber line in the network database and a confirmation message is carried in the display IE of the DSS1 protocol. Otherwise, a refusal message is sent carried in the display IE of the DSS1 protocol.

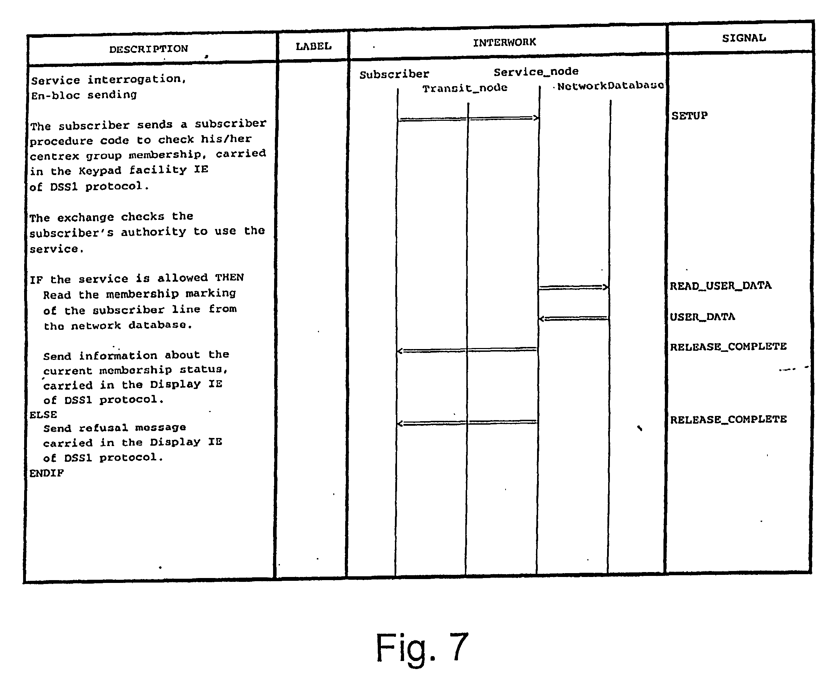

Fig. 7 shows a signalling protocol of a service interrogation for ISDN lines with en-block sending. The difference with regard to Fig. 7 consists in the fact that the membership marking is not changed, but only read from the network database so that the user can learn the current status of the subscriber line.

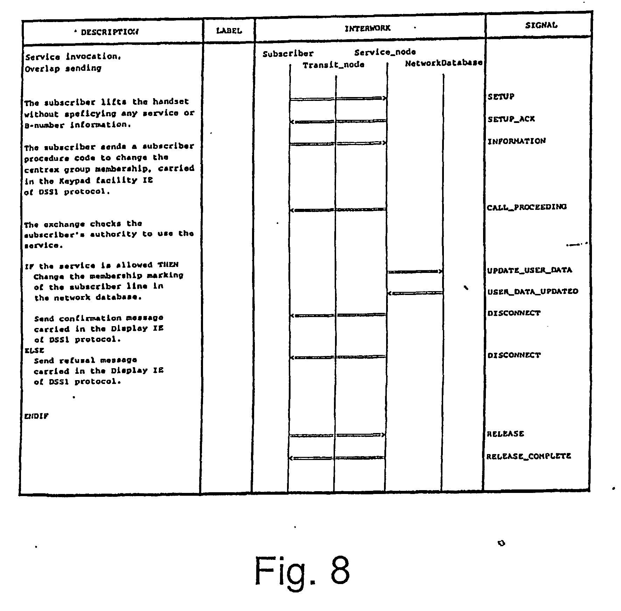

Fig. 8 shows a signalling protocol of service invocation for a ISDN line with overlap sending. Again, as a protocol for common channel access signalling, the digital subscriber signalling system No. 1 can be used. Hence, to change the Centrex group membership the keypad facility IE of the DSS1 protocol can be used. Furthermore, as a confirmation message or a refusal message, the display IE of the DSS1 protocol can be used. If the service is allowed, then the membership marking of the subscriber line is changed in the network database and a confirmation message is sent carried in the display IE of the DSS1 protocol. Otherwise, a refusal message carried in the display IE of DSS1 protocol is sent. Eventually, since overlap sending is applied, a release and release-complete message is exchanged separately.

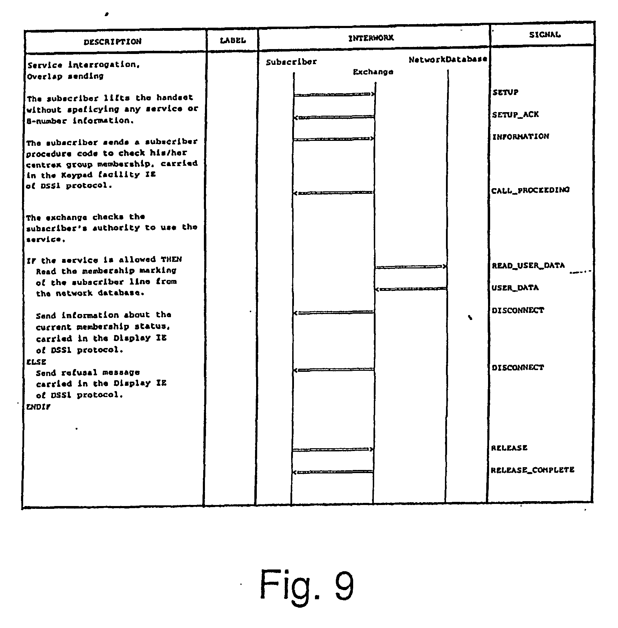

Fig. 9 shows the signalling of service interrogation for ISDN lines with overlap sending. The difference with regard to Fig. 8 consists in the fact that the membership marking is not changed, but only read from the network database. Thereby the user can learn about the status of the current subscriber line.

## Claims

1. Telecommunication network, comprising:
- a plurality of switching units (SU),
- a plurality of customer premises equipments (CPE) connected to said switching units,
- a plurality of links for interconnection of the plurality of switching units,
wherein within the network at least one Centrex means (CTX) for offering Centrex services is provided, said Centrex means is capable of establishing, maintaining and cancelling memberships of Centrex groups among a number of said customer premises equipments (CPE),
**characterized by**
- changing means for changing the membership of a respective customer premises equipment (CPE) in accordance with predefined signals transmitted between said customer premises equipment (CPE) and said Centrex means.

2. Telecommunication network according to claim 1, characterized in that the original membership of a respective customer premises equipment (CPE) belongs to a public service and that said changing means enables the establishing and cancelling of memberships of at least one Centrex service.

3. Telecommunication network according to claims 1 or 2, characterized in that said changing means enables the changing between a public service and the Centrex service.

4. Telecommunication network according to one of the claims 1 - 3, characterized in that said changing means enables the changing between different Centrex services.

5. Telecommunication network according to one of the claims 1 - 4, characterized in that a saving means is provided for saving options and services of a respective customer premises equipment (CPE) for each membership.

6. Telecommunication network according to one of the claims 1 - 5, characterized in that a Centrex service comprises the features of direct dialling inside and outside a Centrex group, station-to station calling within a Centrex-group, grouping multiple sites with transparent numbering plans and centralized message desk.

7. Telecommunication network according to one of the claims 1 - 6, characterized in that the predefined signals comprise a dialled procedure code which is interpreted in the Centrex means.

8. Telecommunication network according to claim 7, characterized in hat after the interpretation of the procedure code a keyword for validation has to be entered which is checked together with the identity of the customer premises equipment (CPE).

9. Telecommunication network according to one of the claims 7 - 8, characterized in that after the interpretation of the procedure code a menu is entered for interactive controlling of the desired change of membership.

10. Telecommunication network according to one of the claims 1 - 9, characterized in that the communication from a switching unit to a respective customer premises equipment (CPE) is carried out via voice prompt or tones.

11. Telecommunication network according to one of the claims 1 - 10, characterized in that the communication from a respective customer premises equipment (CPE) to a corresponding switching unit is carried out via DTMF tones or DSS1 messages.

12. Telecommunication network according to one of the claims 1 - 11, characterized in that the Centrex means comprises a database associated with the switching unit of the respective customer premises equipments (CPE).

13. Telecommunication network according to one of the claims 1 - 11, characterized in that the Centrex means comprises a database associated with a higher node in said network.

14. Telecommunication network according to one of the claims 1 - 11, characterized in that the Centrex means comprises a database associated with a top level node in said network.

15. Telecommunication network according to one of the claims 1 - 14, characterized in that the customer premises equipment comprises a telephone set and/or various equipment suited for transmission of data.

16. Method for changing the membership of Centrex services in a telecommunication network, comprising:
- a plurality of switching units (SU),
- a plurality of customer premises equipments (CPE) connected to said switching units,
- a plurality of links for interconnection of the plurality of switching units,
wherein within the network at least one Centrex means (CTX) for offering Centrex services is provided, said Centrex means is capable of establishing, maintaining and cancelling memberships of Centrex groups among a number of said customer premises equipments (CPE),
**characterized by the steps of:**
- connecting a respective customer premises equipment (CPE) with a corresponding Centrex means, and
- changing the membership of said customer premises equipment (CPE) by said changing means in accordance with predefined signals transmitted between said customer premises equipment (CPE) and said Centrex means.

17. Method according to claim 16, characterized in that the original membership of a respective customer premises equipment (CPE) belongs to a public service and that said changing means enables the establishing and cancelling of memberships of at least one Centrex service.

18. Method according to claim 16 or 17, characterized in that said changing means enables the changing between a public service and the Centrex service.

19. Method according to one of the claims 16 - 18, characterized in that said changing means enables the changing between different Centrex services.

20. Method according to one of the claims 16 - 19, characterized in that options and services of a respective customer premises equipment (CPE) are saved for each membership.

21. Method according to one of the claims 16 - 20, characterized in that a Centrex service comprises the features of direct dialling inside and outside a Centrex group, station-to station calling within a Centrex-group, grouping multiple sites with transparent numbering plans and centralized message desk.

22. Method according to one of the claims 16 - 21, characterized in that the predefined signals comprise a dialled procedure code which is interpreted in the Centrex means.

23. Method according to claim 22, characterized that after the interpretation of the procedure code a keyword for validation has to be entered which is checked together with the identity of the customer premises equipment (CPE).

24. Method according to one of the claims 22 - 23, characterized in that after the interpretation of the procedure code a menu is entered for interactive controlling of the desired change of membership.

25. Method according to one of the claims 16 - 24, characterized in that the communication from a switching unit to a respective customer premises equipment (CPE) is carried out via voice prompt or tones.

26. Method according to one of the claims 16 - 25, characterized in that the communication from a respective customer premises equipment (CPE) to a corresponding switching unit is carried out via DTMF tones or DSS1 messages.

27. Method according to one of the claims 16 - 26, characterized in that the Centrex means comprises a database associated with the switching unit of the respective customer premises equipments (CPE).

28. Method according to one of the claims 16 - 26, characterized in that the Centrex means comprises a database associated with a higher node in said network.

29. Method according to one of the claims 16 - 26, characterized in that the Centrex means comprises a database associated with a top level node in said network.

30. Method according to one of the claims 16 - 29, characterized in that the customer premises equipment comprises a telephone set and/or various equipment suited for transmission of data.
